(19) Europäisches Patentamt
European Patent Office
Office européen des brevets

(11) EP 2 703 076 B1

(12) EUROPÄISCHE PATENTSCHRIFT

(45) Veröffentlichungstag und Bekanntmachung des Hinweises auf die Patenterteilung:
27.04.2016 Patentblatt 2016/17

(51) Int Cl.:
B01J 19/00 (2006.01)     B01J 19/24 (2006.01)
B01J 19/30 (2006.01)     B01J 19/32 (2006.01)
B01J 8/02 (2006.01)

(21) Anmeldenummer: 13182077.1

(22) Anmeldetag: 28.08.2013

(54) **REAKTOR MIT EINER ODER MEHREREN ZUFÜHRLEITUNGEN UND EINER GLEICHVERTEILUNGSEINRICHTUNG FÜR EINEN ODER MEHRERE FLUIDSTRÖME**

REACTOR WITH ONE OR MORE FLUID SUPPLY LINES AND FLOW DISTRIBUTION DEVICE FOR SAID FLUID STREAMS

RÉACTEUR POURVU D'UNE OU PLUSIEURS CONDUITES D'ENTRÉE DE FLUIDE ET D'UN DISPOSITIF DE DISTRIBUTION DESDITS FLUIDES

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 29.08.2012 DE 102012017069

(43) Veröffentlichungstag der Anmeldung:
05.03.2014 Patentblatt 2014/10

(73) Patentinhaber:
• Gerlinger, Wolfgang
  67117 Limburgerhof (DE)
• Olbert, Gerhard
  69221 Dossenheim (DE)
• BASF Schweiz AG
  4057 Basel (CH)

(72) Erfinder:
• Gerlinger, Wolfgang
  67117 Limburgerhof (DE)
• Olbert, Gerhard
  69221 Dossenheim (DE)

(56) Entgegenhaltungen:
WO-A1-2009/056488     WO-A2-2010/083978
DE-A1-102006 060 507     DE-A1-102007 034 715
US-A- 3 996 025     US-A- 5 836 520
US-A1- 2008 159 069     US-A1- 2011 130 607

**Beschreibung**

Die Erfindung betrifft einen Reaktor mit einer oder mehreren Zuführleitungen für einen oder mehrere Fluidströme, mit Einbauten, die Wärme zu- oder abführen und/oder wobei im Reaktor eine chemische Umsetzung stattfindet, mit einer in Hauptströmungsrichtung vor den Einbauten im Reaktor angeordneten Gleichverteilungseinrichtung, sowie eine Verwendung des Reaktors.

Reaktoren, das heißt Apparate, in denen eine chemische Umsetzung stattfindet, werden, um ihre Leistungsfähigkeit zu steigern, zunehmend mit höheren Volumenströmen belastet. Um bei höheren Belastungen mit größeren Volumenströmen eine gleichbleibende, hohe Güte der Geschwindigkeitsverteilung des den Reaktor durchströmenden Fluids über den Querschnitt desselben zu gewährleisten, ist es erforderlich, Gleichverteilungseinrichtungen für das den Reaktor durchströmende Fluid einzubauen. Konventionelle Gleichverteilungseinreichungen führen jedoch zu erhöhten Druckverlusten, mit entsprechend höheren Investitions- und Betriebskosten, insbesondere für die Förderung des Fluids.

Es war daher Aufgabe der Erfindung, eine Gleichverteilungseinrichtung zur Verfügung zu stellen, die eine weitgehend vergleichmäßigte Geschwindigkeitsverteilung über den gesamten Reaktorquerschnitt, das heißt eine Fehlverteilung von maximal 2 bis 5 %, insbesondere von maximal 2 %, bei gleichzeitig möglichst niedrigem Druckverlust gewährleistet.

Insbesondere bei Hochtemperaturanwendungen, d.h. Betriebstemperaturen von > 250 °C, insbesondere > 300 °C, besonders > 500 °C, sind Verdichterstufen teuer, und es ist daher wichtig, eine weitgehend ausgeglichene Geschwindigkeitsverteilung bei gleichzeitig möglichst niedrigem Druckverlust zu gewährleisten.

Die Aufgabe wird gelöst durch einen Reaktor mit einer oder mehreren Zuführleitungen für einen oder mehrere Fluidströme, die jeweils eine Temperatur von 200 °C oder größer aufweisen, an einem Ende des Reaktors und einer oder mehreren Abführleitungen für das Reaktionsgemisch am anderen Ende des Reaktors R, wodurch eine Hauptströmungsrichtung durch den Reaktor definiert wird, wobei die Gesamtquerschnittsfläche für die Zuführleitungen $\sum A_i$ kleiner als die maximale Querschnittsfläche $A_R$ des Reaktors ist, mit Einbauten, die Wärme zu- oder abführen und/oder die Oberfläche vergrößern, an der eine Reaktion stattfindet, sowie mit einer in Hauptströmungsrichtung vor den Einbauten im Reaktor angeordneten Gleichverteilungseinrichtung, dadurch gekennzeichnet, dass

- die Gleichverteilungseinrichtung drei oder mehrere weitgehend ebene Bauteile aufweist, wobei als weitgehend eben verstanden wird, dass dieselben eine Ausdehnung in Hauptströmungsrichtung durch den Reaktor aufweisen, die mindestens um den Faktor 2, bevorzugt mindestens um den Faktor 5, besonders bevorzugt um mindestens den Faktor 10 kleiner als die Ausdehnungsrichtung senkrecht zur Hauptströmungsrichtung durch den Reaktor ist, die

- sich jeweils über den gesamten Querschnitt des Reaktors erstrecken und die

- weitgehend senkrecht zur Hauptströmungsrichtung durch den Reaktor angeordnet sind,

- mit Öffnungen für den Durchtritt des einen oder der mehreren Fluidströme, dergestalt, dass der hydraulische Durchmesser $d_h$ jeder der drei oder mehreren weitgehend ebenen Bauteile, definiert durch $d_h = 4\ V/O$, wobei V das vom Fluid durchströmte Volumen des weitgehend ebenen Bauteils und O die vom Fluid benetzte Oberfläche des jeweiligen weitgehend ebenen Bauteils bedeutet, im Bereich von 0,5 mm bis 1/10 des hydraulischen Durchmessers des Reaktors liegt, und wobei

- jeweils zwei unmittelbar aufeinander folgende weitgehend ebene Bauteile jeweils zueinander, in Hauptströmungsrichtung durch den Reaktor, um weniger als die Hälfte des hydraulischen Durchmessers des Reaktors und mehr als der größere der Werte 10 mal hydraulischer Durchmesser des jeweils unmittelbar stromaufwärts positionierten weitgehend ebenen Bauteils und 1/4 des hydraulischen Durchmessers der Zuführleitung mit der größten Querschnittsfläche $A_i$, beabstandet sind.

Es wurde gefunden, dass durch die erfindungsgemäße Ausgestaltung, den Einbau der oben definierten Gleichverteilungseinrichtung, ein ansonsten unveränderter Reaktor mit höherer Last betrieben werden kann. Es ist somit möglich, die Kapazität bestehender Reaktoren in einfacher Weise zu erhöhen, ohne Inkaufnahme von Nachteilen durch einen erhöhten Druckverlust oder eine größere Fehlverteilung über den Reaktorquerschnitt.

Als Reaktor wird vorliegend, wie üblich, ein Apparat verstanden, in dem eine chemische Umsetzung, d.h. eine oder mehrere chemische Reaktionen, stattfindet.

Der Reaktor ist insbesondere überwiegend zylindrisch ausgebildet, wobei ein zylindrischer Hauptteil des Reaktors mindestens am Reaktoreintritt, bevorzugt an beiden Enden desselben jeweils mit einer Reaktorhaube abschließt, die sich kegelstumpfförmig verjüngt oder kalottenförmig ausgebildet sein kann oder auch beliebig anders aufgeweitet sein kann, z. B. auch in Form einer spontanen Vergrößerung des Durchmessers.

Die Grundfläche des Zylinders ist insbesondere kreisförmig. Sie kann aber auch ellipsenförmig, polygonal, z. B. dreieckig, quadratisch oder rechteckig sein.

Im Falle eines überwiegend zylindrischen Reaktors verläuft die Hauptströmungsrichtung parallel zur Längsachse des Zylinders, von der Zuführung zur Abführung der Fluidströme.

Der Reaktor kann vorteilhaft quer liegend, das heißt mit horizontaler Längsachse, oder auch stehend, das heißt mit vertikaler Längsachse, oder in beliebiger Raumrichtung angeordnet sein.

An einem Ende des Reaktors sind eine oder mehrere Zuführleitungen für einen oder mehrere Fluidströme vorgesehen und am anderen Ende des Reaktors eine oder mehrere, bevorzugt eine Abführleitung für das Reaktionsgemisch.

Als Fluide werden, wie üblich, Gase oder Flüssigkeiten oder Mehrphasengemische derselben verstanden.

Der eine oder die mehreren Fluidströme sind Eduktströme, die im Reaktor an der chemischen Umsetzung teilnehmen.

Darüber hinaus können ein oder mehrere weitere Fluidströme zugeführt werden, die unter den Reaktionsbedingungen im Reaktor inert sind.

Der eine oder die mehreren Fluidströme weisen jeweils eine Temperatur von 200°C oder größer auf.

Die Zuführleitungen mit Querschnittsflächen $A_i$, über die der eine oder die mehreren Fluidströme an einem Ende dem Reaktor zugeführt werden, weisen eine Gesamtquerschnittsfläche $\sum A_i$ auf, wobei i die Laufvariable für die Zuführleitungen bedeutet und wobei $\sum A_i$ kleiner als die maximale Querschnittsfläche $A_R$ des Reaktors ist.

Unter Querschnittsfläche wird eine Fläche senkrecht zur Hauptströmungsrichtung durch den Reaktor verstanden.

Die maximale oder größte Querschnittsfläche $A_R$ des Reaktors entspricht bei einem weitgehend zylindrischen Reaktor der Querschnittsfläche des Reaktors, d.h. bei einem zylindrischen Reaktor der Grundfläche des Zylinders.

Die maximale Querschnittsfläche $A_R$ des Reaktors liegt bevorzugt im Bereich von 0,01 bis 10,0 m$^2$, insbesondere im Bereich von 1 bis 2 m$^2$.

In einer Ausführungsform beträgt das Verhältnis von Reaktorquerschnittsfläche zur Gesamtquerschnittsfläche der Zuleitungen $A_R/\sum A_i$ zwischen 2 und 25, bevorzugt zwischen 3 und 10.

In einer weiteren Ausführungsform beträgt das Verhältnis von Reaktorquerschnittsfläche zur Gesamtquerschnittsfläche der Zuleitungen $A_R/\sum A_i$ zwischen 25 und 10.000, bevorzugt zwischen 25 und 1.000, bevorzugt zwischen 50 und 250.

In einer Ausführungsform kann mit einem oder mehreren der drei oder mehreren weitgehend ebenen Bauteilen oder mit weiteren Einbauten Wärme in den Reaktor zu- oder vom Reaktor abgeführt werden.

Die chemische Umsetzung kann an der Oberfläche der Einbauten, in Schüttungen, die in den Einbauten eingebracht sein können, und/oder in der Gasphase stattfinden.

In einer Ausführungsform sind die Einbauten ein Bündel von Kontaktrohren, die vom Reaktionsgemisch durchströmt werden, wobei der Raum zwischen den Kontaktrohren von einem Wärmeträger zwecks Zu- oder Abführung von Wärme durchströmt wird. In den Rohren des Rohrbündels kann bevorzugt ein heterogener Katalysator eingefüllt sein, an dem die chemische Umsetzung stattfindet.

Weiter bevorzugt können die Einbauten in Form einer regellosen Schüttung oder als strukturierte Packungen ausgebildet sein.

In einer weiteren bevorzugten Ausführungsform sind die Einbauten als Monolithe ausgebildet.

Keramische oder metallische Monolithe sind als Katalysatorträger für Edelmetallkatalysatoren in der mobilen und stationären Abgasreinigung etabliert. Die Kanäle bieten der Strömung einen geringen Strömungswiderstand bei gleichzeitig gleichmäßiger Zugänglichkeit der äußeren Katalysatoroberfläche für gasförmige Reaktionsmedien. Dies ist vorteilhaft gegenüber regellosen Haufwerken, bei denen durch unzählige Umlenkungen bei der Strömung um die Partikel ein großer Druckverlust entsteht und die Katalysatoroberfläche eventuell nicht gleichmäßig genutzt wird. Der Einsatz von Monolithen ist generell interessant für katalytische Prozesse mit hohen Volumenströmen und adiabater Reaktionsführung bei hohen Temperaturen. Diese Merkmale treffen in der chemischen Produktionstechnik insbesondere für Dehydrierungsreaktionen zu, die in einem Temperaturbereich von 400 °C bis zu 700 °C ablaufen.

Als Monolith wird insbesondere ein einstückiger, parallelepipedischer Block mit einer Vielzahl von parallel zueinander angeordneten, durchgehenden Kanälen mit engem hydraulischem Durchmesser, im Bereich von etwa 0,5 bis 4 mm, verstanden.

Die Monolithe sind bevorzugt aus einem keramischen Werkstoff als Trägermaterial gebildet, worauf eine katalytisch aktive Schicht, bevorzugt nach dem sogenannten Wash-Coating-Verfahren, aufgebracht ist.

Das gängigste Material für monolithische Strukturen ist Cordierit (ein Keramikmaterial, das aus Magnesiumoxid, Siliciumoxid und Aluminiumoxid im Verhältnis 2:5:2 besteht). Andere Materialien, deren Monolithstrukturen im Handel erhältlich sind, sind Metalle, Mullit (Mischoxid von Siliciumoxid und Aluminiumoxid, Verhältnis 2:3) und Siliciumcarbid. Diese Materialien haben ähnlich wie Cordierit eine niedrige spezifische BET-Oberfläche (BET = Brunauer, Emmet und Teller) (z.B. für Cordierit typischerweise 0,7 m$^2$/g).

Monolithische Keramikelemente sind mit Zelldichten von 25 - 1600 cpsi (Zellen pro Quadratzoll, entspricht einem hydraulischen Durchmesser von 5 - 0,6 mm) erhältlich. Durch Verwendung einer höheren Zelldichte nimmt die geometrische Oberfläche zu, so dass der Katalysator effizienter verwendet werden kann. Nachteile von höheren Zelldichten sind ein etwas schwierigeres Herstellungsverfahren, eine schwierigere Washcoat-Beschichtung und ein höherer Druckverlust über den Reaktor. Der Druckverlust bleibt jedoch für Monolithen mit hoher Zelldichte im Vergleich zu einem Füllkörperreaktor sehr gering (bei gleicher Anströmgeschwindigkeit in der Regel um einen Faktor 10 geringer), was auf die geraden Monolithkanäle zurückzuführen ist.

Monolithe bieten günstige Voraussetzungen für die Durchführung zum Beispiel der autothermen Dehydrierung von Kohlenwasserstoffen: insbesondere sind engere Reaktorquerschnitte und höhere Strömungsgeschwindigkeiten gegenüber regellos gepackten Festbetten realisierbar, so dass eine effektive, gestufte Zudosierung des Sauerstoffes in den Kohlenwasserstoff enthaltenden Hauptstrom möglich ist. Die Hauptströmungsrichtung durch den Reaktor ist nicht auf eine Abwärtsströmung begrenzt, wie im Fall von regellos gepackten Festbetten.

In Hauptströmungsrichtung vor den Einbauten ist im Reaktor eine Gleichverteilungseinrichtung vorgesehen.

Erfindungsgemäß weist die Gleichverteilungseinrichtung zwei oder mehrere weitgehend ebene Bauteile auf, wobei vorliegend als weitgehend eben verstanden wird, dass dieselben eine Ausdehnung in Hauptströmungsrichtung durch den Reaktor aufweisen, die mindestens um den Faktor 2, bevorzugt mindestens um den Faktor 5, besonders bevorzugt um mindestens den Faktor 10 kleiner als die Ausdehnung senkrecht zur Hauptströmungsrichtung durch den Reaktor ist.

Unter Ausdehnung senkrecht zur Hauptströmungsrichtung wird der hydraulische Durchmesser des Reaktors $D_h$ verstanden.

Die Gleichverteilungseinrichtung weist drei oder mehrere weitgehend ebene Bauteile auf.

In einer bevorzugten Ausführungsform werden drei weitgehend ebene Bauteile eingesetzt.

Die drei oder mehreren weitgehend ebenen Bauteile erstrecken sich jeweils über den gesamten Querschnitt des Reaktors und sind weitgehend senkrecht zur Hauptströmungsrichtung durch den Reaktor angeordnet.

Bevorzugt werden als weitgehend ebene Bauteile Standardbauteile eingesetzt, mit Öffnungen, die untereinander gleich groß und die gleichmäßig über den Querschnitt derselben verteilt sind.

Zwischen oder nach den drei oder mehreren weitgehend ebenen Bauteile kann der Reaktor ein oder mehrere weitere Bauteile enthalten, die ebenfalls insbesondere weitgehend eben sind und sich ebenfalls insbesondere über den gesamten Querschnitt des Reaktors erstrecken, die jedoch ein größeres mittleres Öffnungsverhältnis aufweisen und einen Druckverlust verursachen, der um mindestens den Faktor 2 geringer ist als der des in Hauptströmungsrichtung vorhergehenden weitgehend ebenen Bauteils. Solche zusätzlichen Bauteile beeinflussen die Fluidverteilung weniger effizient als die erfindungsgemäße Anordnung.

Die drei oder mehreren weitgehend ebenen Bauteile weisen Öffnungen für den Durchtritt des einen oder der mehreren Fluidströme auf, dergestalt, dass der hydraulische Durchmesser $d_h$ jeder der zwei oder mehreren weitgehend ebenen Bauteile, definiert durch $d_h = 4 V/O$, wobei V das vom Fluid durchströmte Volumen des Bauteils und O die vom Fluid benetzte Oberfläche des jeweiligen Bauteils bedeutet, im Bereich von 0,5 mm bis 1/10 des hydraulischen Durchmessers des Reaktors liegt.

Der hydraulische Durchmesser eines Reaktors wird als $D_h = 4 A_R/U_R$ definiert, wobei $A_R$ die maximale Querschnittsfläche des Reaktors und $U_R$ den vom Fluidstrom benetzten Umfang des Reaktors am Ort der maximalen Querschnittsfläche definiert.

In einem kreiszylindrischen Reaktor entspricht der hydraulische Durchmesser dem geometrischen Durchmesser des Reaktors.

Durch Bezugnahme auf den hydraulischen Durchmesser lassen sich die Strömungswiderstände (Druckverluste) in Strömungen komplexer Geometrien modellhaft auf Rohrströmungen zurückführen. Der Strömungswiderstand ist dann in dem Bauteil so groß wie in einem längengleichen Rohr mit dem hydraulischen Durchmesser, welches mit derselben Strömungsgeschwindigkeit durchströmt wird [Willi Bohl, Technische Strömungslehre, Vogel-Verlag, 11. Aufl., 1998, S. 131].

Bei Rohren und kreisrunden Löchern entspricht der hydraulische Durchmesser dem mittleren Durchmesser, bei Kanälen mit quadratförmigem Querschnitt (Monolithen, Netzen) der Kantenlänge des Quadrats. Bei Schüttungen kann der hydraulische Durchmesser anhand des äquivalenten Partikeldurchmessers (siehe Wärmeübertragung in Festbetten, durchmischten Schüttgütern und Wirbelschichten, Ernst-Ulrich Schlünder, Evangelos Tsotsas, 1988, Georg Thieme Verlag, Stuttgart, S. 30 und VDI-Wärmeatlas, 7. Aufl. 1994, Le1)der Formkörper abgeschätzt werden mit

$$d_h \;=\; \frac{2}{3} \; \frac{\varepsilon}{1-\varepsilon} \; d_s$$

Erfindungsgemäß sind jeweils zwei unmittelbar aufeinander folgende, weitgehend ebene Bauteile voneinander in Hauptströmungsrichtung durch den Reaktor um weniger als die Hälfte des hydraulischen Durchmessers $D_h$ des Reaktors und mehr als der größere der Werte 10 mal hydraulischer Durchmesser des jeweils unmittelbar stromaufwärts positionierten Bauteils und 1/4 des hydraulischen Durchmessers der Zuführleitung mit der größten Querschnittsfläche $A_i$, beabstandet.

In einer bevorzugten Ausführungsform liegt der hydraulische Durchmesser $d_h$ jedes der drei oder mehreren weitgehend ebenen Bauteile im Bereich von 1 mm bis zum kleineren der Werte, ausgewählt aus dem kleinsten der hydraulischen Durchmesser der einen oder der mehreren Zuführleitungen und 1/10 des hydraulischen Durchmessers $D_h$ des Reaktors.

In einer weiteren bevorzugten Ausführungsform beträgt der Abstand des in Strömungsrichtung ersten der weitgehend ebenen Bauteile vom Ende der Zuführleitung mit der größten Querschnittsfläche $A_i$ mindestens ein Viertel des hydraulischen Durchmessers der Zuführleitung mit der größten Querschnittsfläche $A_i$, bevorzugt mindestens die Hälfte des hydraulischen Durchmessers der Zuführleitung mit der größten Querschnittsfläche $A_i$ und maximal einmal den hydraulischen Durchmesser des Reaktors, bevorzugt die Hälfte des hydraulischen Durchmessers des Reaktors.

Hierbei wird als Ende der Zuführleitung die Stelle verstanden, an der sich der bis dahin konstante Durchmesser der Zuführleitung aufweitet.

Die Zählung erstes, zweites, drittes bis letztes der weitgehend ebenen Bauteile beschreibt die Reihenfolge stromabwärts in Hauptströmungsrichtung. So ist z.B. das erste der weitgehend ebenen Bauteile in Hauptströmungsrichtung vor dem zweiten der weitgehend ebenen Bauteile angeordnet.

Die drei oder mehreren, weitgehend ebenen Bauteile weisen bevorzugt mittlere Öffnungsverhältnisse $\varepsilon$ auf, die wie folgt definiert sind:

$$\varepsilon \;=\; g\;\frac{V_O}{V_B}$$

Darin beschreibt $V_O$ das mit Fluid gefüllte Volumen innerhalb des Bauteils und $V_B$ die Summe des Materialvolumens des Bauteils plus das mit Fluid gefüllte Volumen des Bauteils. Der Faktor g ist ein Geometriefaktor; g ist definiert durch:

$$g \;=\; \sqrt{\frac{d_h}{L}}\,,$$

wobei $d_h$ der hydraulische Durchmesser des Bauteils und L dessen Länge in Hauptströmungsrichtung ist.

Bevorzugt liegt der Kehrwert des mittleren Öffnungsverhältnisses $\varepsilon$ für jedes der zwei, drei oder mehreren weitgehend ebenen Bauteile, in Abhängigkeit vom Verhältnis der Gesamtquerschnittsfläche für die Zuführleitungen $\Sigma A_i$ zur maximalen Querschnittsfläche $A_R$ des Reaktors in einem Bereich, für den die Werte für die Parameter m bzw. c aus der nachfolgenden Gleichung

$$\frac{1}{\varepsilon} \;=\; m\;\sqrt{\frac{A_R}{\Sigma A_i}} \;+\; c$$

für m in einem Bereich zwischen 0,15 und 1,7 und für c in einem Bereich zwischen 1,5 und 8,5, bevorzugt für c in einem Bereich zwischen 2,3 und 6,6, liegen.

In einer weiteren Ausführungsform sind drei weitgehend ebene Bauteile vorgesehen, wobei der Kehrwert des mittleren Öffnungsverhältnisses $\varepsilon$ für jedes der drei, weitgehend ebenen Bauteile, in Abhängigkeit vom Verhältnis der Gesamtquerschnittsfläche für die Zuführleitungen $\Sigma A_i$ zur maximalen Querschnittsfläche $A_R$ des Reaktors in einem Bereich liegt, für den die Werte für die Parameter m bzw. c aus der nachfolgenden Gleichung

$$\frac{1}{\varepsilon} \;=\; m\;\sqrt{\frac{A_R}{\Sigma A_i}} \;+\; c$$

für m in einem Bereich zwischen 0,34 und 0,38 und für c in einem Bereich zwischen 1,5 und 8,5, bevorzugt in einem Bereich zwischen 2,3 und 6,6, liegen.

In einer weiteren Ausführungsform sind vier oder mehrere weitgehend ebene Bauteile vorgesehen, wobei der Kehrwert des mittleren Öffnungsverhältnisses $\varepsilon$ für jedes der vier oder mehreren weitgehend ebenen Bauteile, in Abhängigkeit vom Verhältnis der Gesamtquerschnittsfläche für die Zuführleitungen $\Sigma A_i$ zur maximalen Querschnittsfläche $A_R$ des Reaktors in einem Bereich liegt, für den die Werte für die Parameter m bzw. c aus der nachfolgenden Gleichung

$$\frac{1}{\varepsilon} \;=\; m\;\sqrt{\frac{A_R}{\Sigma A_i}} \;+\; c$$

für m in einem Bereich von 0,15 und 0,17 und für c in einem Bereich von 1,5 bis 8,5, bevorzugt in einem Bereich zwischen 2,3 und 6,6, liegen.

In einer Ausführungsform beträgt die Anzahl der Öffnungen in jedem der weitgehend ebenen Bauteile zwischen 10 und einer Million, bevorzugt zwischen 50 und 10.000 Öffnungen, besonders bevorzugt zwischen 100 und 2.000.

Bevorzugt weist das letzte in Hauptströmungsrichtung durch den Reaktor der oder mehreren weitgehend ebenen Bauteile ein mittleres Öffnungsverhältnis $\varepsilon$ auf, welches maximal so groß ist wie oder kleiner ist als das mittlere Öffnungsverhältnis jedes der in Hauptströmungsrichtung durch den Reaktor vorhergehenden weitgehend ebenen Bauteile.

Weiter bevorzugt weist das erste in Hauptströmungsrichtung durch den Reaktor der mindestens zwei, drei oder mehreren weitgehend ebenen Bauteile ein mittleres Öffnungsverhältnis $\varepsilon$ auf, welches mindestens so groß ist wie oder größer ist als das mittlere Öffnungsverhältnis jedes der in Hauptströmungsrichtung durch den Reaktor nachfolgenden Bauteile.

In einer bevorzugten Ausführungsform sind die Öffnungen der weitgehend ebenen Bauteile gleichmäßig über den Querschnitt der weitgehend ebenen Bauteile verteilt.

In einer weiteren Ausführungsform weist der Reaktor drei oder mehrere weitgehend ebene Bauteile auf, wobei das Verhältnis der mittleren Öffnungsverhältnisse $\varepsilon_1$ des ersten Bauteils zum mittleren Öffnungsverhältnis $\varepsilon_n$ des letzten Bauteils in Abhängigkeit vom Verhältnis der Gesamtquerschnittsfläche der Zuführleitungen $\Sigma A_i$ zur maximalen Querschnittsfläche $A_R$ des Reaktors in einem Bereich liegt, für den die Werte der Parameter p bzw. q aus der nachfolgenden Gleichung:

$$\frac{\varepsilon_1}{\varepsilon_n} = p \left(\frac{\Sigma A_i}{A_R}\right) + q$$

für p in einem Bereich zwischen 0,7 und 2,5 und für q in einem Bereich zwischen 1,0 und 2,4, bevorzugt für p in einem Bereich zwischen 2,3 und 2,5 und für q in einem Bereich zwischen 1,1 und 2,0, liegen.

Die drei oder mehreren weitgehend ebenen Bauteile sind bevorzugt Netze, Siebe oder Lochbleche, die aufgrund Ihrer breiten Verwendung schnell verfügbar und preisgünstig in verschiedenen standardisierten Geometrien erhältlich sind.

Weiterhin bevorzugt sind als weitgehend ebene Bauteile in Hauptströmungsrichtung durch den Reaktor angeordnete Rohrbündel oder Rohrreihen in Querrichtung zur Hauptströmungsrichtung, Dosierrohre sowie Plattenwärmetauscher, die aufgrund Ihrer Innengeometrie zum Wärmemanagement der Hauptströmung verwendet werden können, und die die Zudosierung weiterer Stoffe ermöglichen. Rohre als Bauteile können bevorzugt einen kreisförmigen oder ellipsenförmigen oder polygonförmigen, z.B. rechteckigen oder quadratischen Querschnitt aufweisen.

Weiterhin bevorzugt sind Schäume, Schüttungen oder Monolithe, die sehr kleine hydraulische Durchmesser ermöglichen und an geänderte Betriebsbedingungen, an neue Gegebenheiten, durch einfachen Austausch angepasst werden können.

Die mindestens drei weitgehend ebenen Bauteile können gleichartig oder voneinander verschieden sein.

Bevorzugt können die Einbauten die Funktion des letzten in Hauptströmungsrichtung durch den Reaktor angeordneten Bauteils übernehmen.

Gegenstand der Erfindung ist auch die Verwendung des vorstehend beschriebenen Reaktors zur Durchführung von chemischen Umsetzungen bei Reaktionstemperaturen in einem Bereich von 200 °C bis 2.000 °C, bevorzugt bei Reaktionstemperaturen in einem Bereich von 300 °C bis 1.500 °C, weiter bevorzugt bei Reaktionstemperaturen in einem Bereich von 500 °C bis 1.000 °C.

Bevorzugt sind die chemischen Umsetzungen ausgewählt aus Dehydrierungen, insbesondere von Propan oder Butan, der Salpetersäure-Herstellung oder der Herstellung von Formaldehyd.

Besonders bevorzugt ist die Verwendung, wonach der Reaktor ein Abgasreinigungssystem für einen Schiffdieselmotor ist.

Der Reaktor weist den Vorteil auf, dass er, aufgrund des niedrigeren Druckverlustes, stärker belastet werden kann, wobei dennoch die ingenieurtechnischen Vorteile erreicht werden können, die üblicherweise mit einem erhöhten Druckverlust einhergehen, und eine bessere Geschwindigkeitsverteilung der Ströme und ein gleichmäßigerer Wärmeübergang.

Bevorzugt weisen die insbesondere jeweils unmittelbar aufeinander folgenden Bauteile gegeneinander versetzte Öffnungen auf.

Die Erfindung basiert auf der Erkenntnis der folgenden Zusammenhänge bezüglich des Abbaus einer Geschwindigkeitsfehlverteilung in einem Reaktor:

Mit zunehmendem Abstand vom Ende der Zuführleitung kommt es durch Verwirbelung zu einer Erhöhung der Verteilungsgüte. Ohne Verteilungselemente ist hierfür eine große Einlauflänge notwendig. Bei chemischen Reaktoren können zusätzlich unerwünschte Nebenreaktionen eintreten bzw. der Hold-Up kann sicherheitstechnische oder kostentechnische Nachteile mit sich bringen. Daher ist man meist bestrebt, die Einlauflänge eines Reaktors möglichst kurz zu halten, insbesondere maximal 1 Reaktordurchmesser, bevorzugt maximal 1/2 Reaktordurchmesser.

Andererseits können Bauteile ihre Wirkung nicht oder nicht voll erzielen, wenn sie zu nahe aneinander gesetzt werden. Z.B. wirken zwei Lochbleche mit denselben Abmessungen wie ein einziges, wenn sie sehr nahe aufeinander folgen. Das Fluid strömt strahlförmig aus den Löchern des ersten Lochblechs. Wenn das zweite Lochblech direkt im Anschluss kommt, weiten sich die Strahlen nicht auf und strömen nahezu unverändert durch das zweite Lochblech. Dann ist das zweite Lochblech für die Strömung quasi nicht vorhanden. Damit das erste Lochblech seine Wirkung entfalten kann, wurde gefunden, dass der Abstand zum zweiten Lochblech mindestens 5, bevorzugt 10, besonders bevorzugt 20 hydraulische Durchmesser sein sollte. Dann weiten sich die Strahlen nach den Öffnungen des ersten Lochblechs so weit auf, dass die Maximalgeschwindigkeit in den Öffnungen weitgehend abgebaut ist. Bei versetzt angeordneten Öffnungen ist der beschriebene Effekt weniger stark ausgeprägt, jedoch führt eine zu nahe Abfolge zum Aufprallen der Strömung auf das zweite Lochblech, was zu einem erhöhten Druckverlust führt.

Die Erfindung wird im Folgenden anhand einer Zeichnung sowie von Ausführungsbeispielen näher erläutert

Es zeigen im Einzelnen:

Figur 1: eine schematische Darstellung einer ersten bevorzugten Ausführungsform eines erfindungsgemäßen Reaktors im Längsschnitt,

Figur 2: eine schematische Darstellung einer zweiten bevorzugten Ausführungsform eines erfindungsgemäßen Reaktors im Längsschnitt,

Figur 3: eine schematische Darstellung einer weiteren bevorzugten Ausführungsform für einen erfindungsgemäßen Reaktors und

Figur 4: eine schematische Darstellung eines Abgassystems eines Schiffsdieselmotors.

In den Figuren bezeichnen gleiche Bezugszeichen jeweils gleiche oder entsprechende Bauteile.

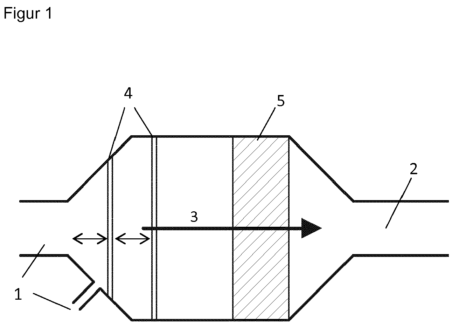

Die schematische Darstellung in Figur 1 zeigt einen Reaktor R mit einem weitgehend zylindrischen Hauptteil, das sich an beiden Enden desselben konisch verjüngt. An einem Ende des Reaktors sind beispielhaft zwei Zuführleitungen, Bezugsziffer 1, mit jeweils unterschiedlichem hydraulischem Durchmesser, vorgesehen. Am anderen Ende des Reaktors ist eine Abführleitung 2 vorgesehen. Die Hauptströmungsrichtung, in Richtung der Längsachse des Reaktors R, ist mit der Bezugsziffer 3 bezeichnet. Im Reaktor R sind Einbauten 5 vorgesehen, die Wärme zu- oder abführen und/oder die Oberfläche vergrößern, sowie beispielhaft ein weitgehend ebenes Bauteil 4 sich über den gesamten Querschnitt des Reaktors R erstreckt und weitgehend senkrecht zur Hauptströmungsrichtung 3 des Reaktors R angeordnet ist.

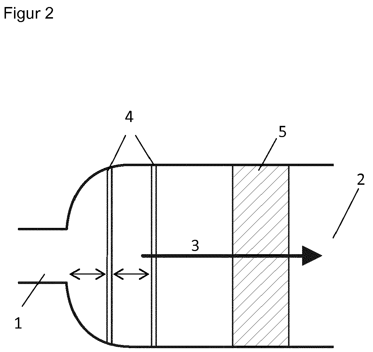

Figur 2 zeigt einen weitgehend analogen Reaktor R, jedoch ist das eine Ende des Reaktors abweichend hiervon nicht konisch, sondern kalottenförmig ausgebildet. Das andere Reaktorende beinhaltet einen Auslass ohne Änderung des Durchmessers.

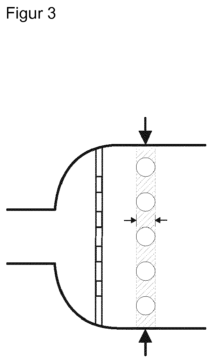

Die in Figur 3 dargestellte weitere bevorzugte Ausführungsform zeigt ebenfalls einen Reaktor R mit kalottenförmigen Enden, wobei hier jedoch die Einbauten 4 als ein Lochblech ausgebildet sind, und das weitgehend ebene Bauteil 5 als Reihe von Rohren, die senkrecht zur Hauptströmungsrichtung 3 durch den Reaktor R angeordnet sind.

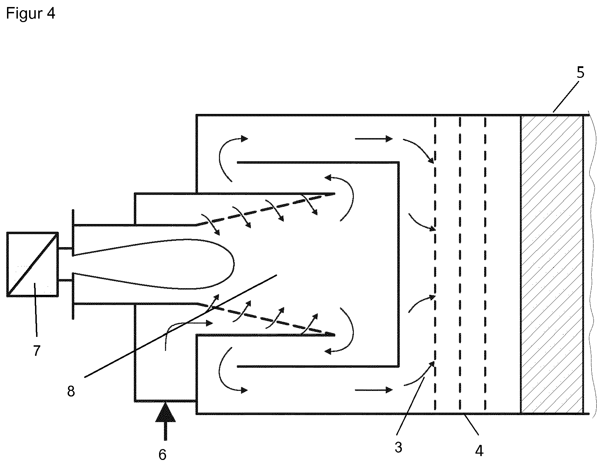

Die in Figur 4 dargestellte weitere bevorzugte Ausführungsform zeigt die Verwendung in einem Abgassystem eines Schiffdieselmotors. Hierbei wird der unbehandelte Abgasstrom 6 einer Brennkammer 8 zugeführt und dort zusätzlich durch Verbrennung von Brennstoff mittels eines Brenners 7 auf die notwendige Temperatur gebracht. Der aus der Brennkammer austretende Gasstrom entspricht der Bezugsnummer 1.

Ausführungsbeispiele

In den nachfolgenden Ausführungsbeispielen wird die Druckverlustmessung mit Differenzdruckmessung vor dem ersten Bauteil und nach dem letzten Bauteil durchgeführt. Die Messung der Fehlverteilung wird mit einem handelsüblichen Prandtlschen Staurohr durchgeführt. Das Staurohr ist als ziehbare Sonde eingebracht. Die Messung der Fehlverteilung erfolgt hinter dem letzten Bauteil in einem Abstand von 15 hydraulischen Durchmessern zum letzten Bauteil. Hierzu sind über den Reaktorquerschnitt 10 Öffnungen in gleichem Abstand gebohrt. 9 davon sind jeweils verschlossen und durch eine wird die Sonde geführt. In einem Gitter von 10 x 10 Punkten sind mit dem Staurohr Messungen der Geschwindigkeit durchgeführt. Die Fehlverteilung wird als Standardabweichung der Geschwindigkeit über diese 100 Messpunkte ermittelt.

Ausführungsbeispiel 1

Eingesetzt wird ein Reaktor R gemäß der schematischen Darstellung in Figur 1, jedoch mit einer einzigen Zuführleitung 1, mit einem Durchmesser von 100 mm, das sich spontan auf einen Rechteckquerschnitt mit den Maßen 170 x 330 mm aufweitet.

Als weitgehend ebene Bauteile werden 3 Lochbleche eingesetzt, ein erstes Lochblech mit einem Lochdurchmesser von 3 mm und einem mittleren Öffnungsverhältnis von 18 %, ein zweites Lochblech mit einem Lochdurchmesser von ebenfalls 3 mm und einem mittleren Öffnungsverhältnis von 18 %, und ein drittes Lochblech mit einem Lochdurchmesser ebenfalls 3 mm, jedoch einem mittleren Öffnungsverhältnis von 17 %.

Die Dicke der Lochbleche beträgt jeweils 3 mm, und die Lochbleche sind hintereinander in einem Abstand von jeweils 95 mm angeordnet. Der Abstand vom Zulauf zum ersten Lochblech beträgt 100 mm.

Durch den Reaktor R wird ein Massenstrom von 685 kg/h, mit einer Dichte von 1,05 kg/m$^3$, und einer Viskosität von 0,0243 mPas geleitet.

Der Druckverlust beträgt 8 mbar. Es wird eine Fehlverteilung von < 1 % ermittelt.

Ausführungsbeispiel 2

Eingesetzt wird ein Reaktor R analog zu dem in Ausführungsbeispiel 1 eingesetzten Reaktor R, mit einer einzigen Zuführleitung 1, mit einem Durchmesser von 100 mm, jedoch mit einer konischen Aufweitung desselben auf 170 x 330 mm.

In dem Reaktor R sind ebenfalls 3 Lochbleche angeordnet, ein erstes Lochblech im konischen Übergang, mit den Maßen 120 x 240 mm, mit einem Lochdurchmesser von 3 mm, einer von Dreiecksteilung 6,0 mm und mit einem mittleren Öffnungsverhältnis von ca. 22,5 %.

Ein zweites Lochblech ist ebenfalls im konischen Übergang angeordnet, mit den Maßen 150 x 300 mm, einem Lochdurchmesser von 3 mm, einer Dreiecksteilung von 6,6 mm und einem mittleren Öffnungsverhältnis von ca. 18,7 %.

Ein drittes Lochblech ist im rechteckigen, quaderförmigen Hauptteil des Reaktors R angeordnet, mit den Abmessungen von 170 x 330 mm, einem Lochdurchmesser von 3 mm, einer Dreiecksteilung von 7,2 mm und einem mittleren Öffnungsverhältnis von ca. 15,8 %.

Die Lochbleche weisen jeweils eine Dicke von 3 mm auf, und sind in einem Abstand von jeweils 95 mm angeordnet.

Der Abstand vom Zulauf zum ersten Lochblech beträgt 100 mm.

Durch den Reaktor R wird ein Fluidstrom mit gleicher Masse, Dichte und Viskosität wie in Ausführungsbeispiel 1 geleitet.

Der Druckverlust über den Reaktor R beträgt 12 mbar. Es wird eine Fehlverteilung von < 1 % gemessen.

Zum Vergleich wird derselbe Massenstrom durch einen Reaktor R geleitet, der jedoch als Gleichverteilungseinrichtung jeweils nur ein Lochblech aufweist:

Vergleichsbeispiel 1

Eingesetzt wird ein Reaktor R mit einem Lochblech und einer Zuführleitung 1 mit einem Durchmesser von 100 mm, die sich spontan auf 170 x 330 mm aufweitet.

Das Lochblech hat eine Dicke von 3 mm, einen Lochdurchmesser von 3 mm und ein mittleres Öffnungsverhältnis von 2,6 %. Der Abstand vom Zulauf zum Lochblech beträgt 100 mm.

Der Druckverlust über den Reaktor R beträgt 130 mbar.

Es wird eine Fehlverteilung von 1 % gemessen.

Vergleichsbeispiel 2

Die Versuchsdurchführung ist analog zu Vergleichsbeispiel 1, jedoch beträgt das mittlere Öffnungsverhältnis des Lochblechs, abweichend vom Vergleichsbeispiel 1, 8 %.

Der Druckverlust über den Reaktor R beträgt 13 mbar. Es wird eine Fehlverteilung von 10 % gemessen.

Vergleichsbeispiel 3

Eingesetzt wird ein Reaktor R mit einer einzigen Zuführleitung 1, mit einem Durchmesser von 500 mm und einer Klöpperbodenaufweitung auf einen Durchmesser von 2.500 mm.

Als Gleichverteilungseinrichtung wird ebenfalls ein einziges Lochblech, mit einer Blechdicke von 5 mm, einem Lochdurchmesser von 5 mm, einer Dreiecksteilung von 41 mm, und einem mittleren Öffnungsverhältnis von 1,3 % eingesetzt.

Der Abstand vom Zulauf zum Lochblech beträgt 250 mm.

Es wird ein Fluidstrom von 20 t/h, einer Dichte 1,05 kg/m$^3$ und einer Viskosität von 0,0243 mPas durchgeleitet.

Der Druckverlust über den Reaktor R beträgt 62 mbar.

Es wird eine Fehlverteilung von 3 % gemessen.

Ausführungsbeispiel 3

Eingesetzt wird ein Reaktor R mit zwei Netzen, einer querangeströmten Rohrreihe und einem Lochblech, als weitgehend ebene Bauteile 4.

Die Zuführleitung 1 ist ein Rohr mit einem Durchmesser von 500 mm, mit einer Klöpperbodenaufweitung auf einen Durchmesser von 2.500 mm.

Das erste Netz weist ein mittleres Öffnungsverhältnis von 60 %, das zweite Netz ein mittleres Öffnungsverhältnis von 50 % auf.

Die querangeströmte Rohrreihe weist ein mittleres Öffnungsverhältnis von 40 % auf.

Das Lochblech hat eine Blechdicke von 5 mm und ein mittleres Öffnungsverhältnis von 8 %.

Der Abstand vom Zulauf zum Lochblech beträgt 250 mm.

Durch den Reaktor R wird ein Massenstrom von 20 t/h, einer Dichte von 1,05 kg/m$^3$ und einer Viskosität von 0,0243 mPas geleitet.

Der Druckverlust über den Reaktor R beträgt weniger als 8 mbar. Es wird eine Fehlverteilung von 3 % gemessen.

Ausführungsbeispiel 4:

Eingesetzt wird ein Reaktor R mit einem Rohrbündel in Hauptströmungsrichtung, einer querangeströmten Rohrreihe und einem Lochblech.

Die Zuführleitung ist analog zum Ausführungsbeispiel 3 ausgebildet.

In Hauptströmungsrichtung 3 durch den Reaktor R ist ein Bündel von Rohren mit einem Innendurchmesser von 26 mm und einer Dreiecksteilung von 38 mm, sowie einem mittleren Öffnungsverhältnis von 42,4 %, das von der Hauptströmung durchströmt wird.

Vorgesehen ist weiterhin eine querangeströmte Rohrreihe mit einem mittleren Öffnungsverhältnis von 41 %, einem Rohrdurchmesser von 30 mm und einem Rohrabstand von 40 mm von Rohrmitte zu Rohrmitte.

Das Lochblech mit einer Blechdicke von 5 mm weist ein mittleres Öffnungsverhältnis von 7,5 % auf und einen Abstand vom Zulauf zum Lochblech von 250 mm.

Durch den Reaktor R wird ein Massenstrom von 20 t/h, einer Dichte von 1,05 kg/m$^3$, und einer Viskosität von 0,0243 mPas geleitet.

Der Druckverlust über den Reaktor R beträgt etwa 2 mbar. Es wird eine Fehlverteilung von 3 % gemessen.

Ausführungsbeispiel 5

Eingesetzt wird ein Reaktor R gemäß der schematischen Darstellung in Figur 1, jedoch mit einer einzigen Zuführleitung 1, mit einem Durchmesser von 1.000 mm, das sich spontan auf einen Rechteckquerschnitt mit den Maßen 1.700 x 3.300 mm aufweitet.

Als weitgehend ebene Bauteile werden 3 Lochbleche eingesetzt, ein erstes Lochblech mit einem Lochdurchmesser von 5 mm und einem mittleren Öffnungsverhältnis von 18 %, ein zweites Lochblech mit einem Lochdurchmesser von ebenfalls 5 mm und einem mittleren Öffnungsverhältnis von 18 %, und ein drittes Lochblech mit einem Lochdurchmesser ebenfalls 5 mm und einem mittleren Öffnungsverhältnis von ebenfalls 18 %.

Die Dicke der Lochbleche beträgt jeweils 5 mm, und die Lochbleche sind hintereinander in einem Abstand von jeweils 250 mm angeordnet. Der Abstand vom Zulauf zum ersten Lochblech beträgt 500 mm.

Durch den Reaktor R wird ein Massenstrom von 70 t/h, mit einer Dichte von 1,05 kg/m³, und einer Viskosität von 0,0243 mPas geleitet.

Der Druckverlust beträgt etwa 9 mbar. Es wird eine Fehlverteilung von < 1 % ermittelt.

Ausführungsbeispiel 6

Eingesetzt wird ein Reaktor R gemäß der schematischen Darstellung in Figur 1, jedoch mit einer einzigen Zuführleitung 1, mit einem Durchmesser von 1.000 mm, das sich spontan auf einen Rechteckquerschnitt mit den Maßen 1.700 x 3.300 mm aufweitet.

Als weitgehend ebene Bauteile werden 3 Lochbleche eingesetzt, ein erstes Lochblech mit einem Lochdurchmesser von 5 mm und einem mittleren Öffnungsverhältnis von 35 %, ein zweites Lochblech mit einem Lochdurchmesser von ebenfalls 5 mm und einem mittleren Öffnungsverhältnis von 30 %, und ein drittes Lochblech mit einem Lochdurchmesser ebenfalls 5 mm, jedoch einem mittleren Öffnungsverhältnis von 18 %.

Die Dicke der Lochbleche beträgt jeweils 5 mm, und die Lochbleche sind hintereinander in einem Abstand von jeweils 250 mm angeordnet. Der Abstand vom Zulauf zum ersten Lochblech beträgt 500 mm.

Durch den Reaktor R wird ein Massenstrom von 70 t/h, mit einer Dichte von 1,05 kg/m³, und einer Viskosität von 0,0243 mPas geleitet.

Der Druckverlust beträgt etwa 5 mbar. Es wird eine Fehlverteilung von etwa 1 % ermittelt.

**Patentansprüche**

1. Reaktor (R) mit einer oder mehreren Zuführleitungen (1) für einen oder mehrere Fluidströme, die jeweils eine Temperatur von 200 °C oder größer aufweisen, an einem Ende des Reaktors (R) und einer oder mehreren Abführleitungen (2) für das Reaktionsgemisch am anderen Ende des Reaktors (R), wodurch eine Hauptströmungsrichtung (3) durch den Reaktor (R) definiert wird, wobei die Gesamtquerschnittsfläche für die Zuführleitungen $\sum A_i$ kleiner als die maximale Querschnittsfläche $A_R$ des Reaktors (R) ist, mit Einbauten (5), die Wärme zu- oder abführen und/oder die Oberfläche vergrößern, an der eine Reaktion stattfindet, sowie mit einer in Hauptströmungsrichtung (3) vor den Einbauten (5) im Reaktor (R) angeordneten Gleichverteilungseinrichtung, **dadurch gekennzeichnet, dass**

   - die Gleichverteilungseinrichtung drei oder mehrere weitgehend ebene Bauteile (4) aufweist, wobei als weitgehend eben verstanden wird, dass dieselben eine Ausdehnung in Hauptströmungsrichtung durch den Reaktor aufweisen, die mindestens um den Faktor 2, bevorzugt mindestens um den Faktor 5, besonders bevorzugt um mindestens den Faktor 10 kleiner als die Ausdehnungsrichtung senkrecht zur Hauptströmungsrichtung durch den Reaktor (R) ist, die

   - sich jeweils über den gesamten Querschnitt des Reaktors (R) erstrecken und die
   - weitgehend senkrecht zur Hauptströmungsrichtung (3) durch den Reaktor (R) angeordnet sind,
   - mit Öffnungen für den Durchtritt des einen oder der mehreren Fluidströme, dergestalt, dass der hydraulische Durchmesser $d_h$ jeder der drei oder mehreren weitgehend ebenen Bauteile (4), definiert durch $d_h = 4\ V/O$, wobei V das vom Fluid durchströmte Volumen des weitgehend ebenen Bauteils (4) und O die vom Fluid benetzte Oberfläche des jeweiligen weitgehend ebenen Bauteils (4) bedeutet, im Bereich von 0,5 mm bis 1/10 des hydraulischen Durchmessers $D_h$ des Reaktors (R) liegt, und wobei
   - jeweils zwei unmittelbar aufeinander folgende weitgehend ebene Bauteile (4) jeweils zueinander, in Hauptströmungsrichtung (3) durch den Reaktor (R), um weniger als die Hälfte des hydraulischen Durchmessers $D_h$ des Reaktors (R) und mehr als der größere der Werte 10 mal hydraulischer Durchmesser des jeweils unmittelbar stromaufwärts positionierten weitgehend ebenen Bauteils (4) und 1/4 des hydraulischen Durchmessers der Zuführleitung (1) mit der größten Querschnittsfläche $A_i$, beabstandet sind.

2. Reaktor (R) nach Anspruch 1, **dadurch gekennzeichnet, dass** der hydraulische Durchmesser $d_h$ jedes der drei oder mehreren weitgehend ebenen Bauteile (4) im Bereich von 1 mm bis zum kleineren der Werte, ausgewählt aus dem kleinsten der hydraulischen Durchmesser der einen oder der mehreren Zuführleitungen (1) und 1/10 des hydraulischen Durchmessers $D_h$ des Reaktors (R), liegt.

3. Reaktor (R) nach einem der Ansprüche 1 oder 2, **dadurch gekennzeichnet, dass** der Kehrwert des mittleren Öffnungsverhältnisses $\varepsilon$ für jedes der drei oder mehreren weitgehend ebenen Bauteile (4), in Abhängigkeit vom Verhältnis der Gesamtquerschnittsfläche für die Zuführleitungen (1) $\sum A_i$ zur maximalen Querschnittsfläche $A_R$ des Reaktors (R) in einem Bereich liegt, für den die Werte für die Parameter m bzw. c aus der nachfolgenden Gleichung

$$\frac{1}{\varepsilon} = m \sqrt{\frac{A_R}{\Sigma A_i}} + c$$

für m in einem Bereich zwischen 0,15 und 1,7 und für c in einem Bereich zwischen 1,5 und 8,5, bevorzugt für c in einem Bereich zwischen 2,3 und 6,6, liegen.

4. Reaktor (R) nach einem der Ansprüche 1 bis 3, **dadurch gekennzeichnet, dass** drei weitgehend ebene Bauteile (4) vorgesehen sind, und dass der Kehrwert des mittleren Öffnungsverhältnisses ε für jedes der drei, weitgehend ebenen Bauteile (4), in Abhängigkeit vom Verhältnis der Gesamtquerschnittsfläche für die Zuführleitungen (1) $\sum A_i$ zur maximalen Querschnittsfläche $A_R$ des Reaktors (R) in einem Bereich liegt, für den die Werte für die Parameter m bzw. c aus der nachfolgenden Gleichung

$$\frac{1}{\varepsilon} \;=\; m \; \sqrt{\frac{A_R}{\sum A_i}} \;+\; c$$

für m in einem Bereich zwischen 0,34 und 0,38 und für c in einem Bereich zwischen 1,5 und 8,5, bevorzugt in einem Bereich zwischen 2,3 und 6,6, liegen.

5. Reaktor (R) nach einem der Ansprüche 1 bis 3, **durch gekennzeichnet, dass** vier oder mehrere weitgehend ebene Bauteile (4) vorgesehen sind, und der Kehrwert des mittleren Öffnungsverhältnisses ε für jedes der vier oder mehreren weitgehend ebenen Bauteile (4), in Abhängigkeit vom Verhältnis der Gesamtquerschnittsfläche für die Zuführleitungen (1) $\sum A_i$ zur maximalen Querschnittsfläche $A_R$ des Reaktors (R) in einem Bereich liegt, für den die Werte für die Parameter m bzw. c aus der nachfolgenden Gleichung

$$\frac{1}{\varepsilon} \;=\; m \; \sqrt{\frac{A_R}{\sum A_i}} \;+\; c$$

für m in einem Bereich von 0,15 und 0,17 und für c in einem Bereich von 1,5 bis 8,5, bevorzugt in einem Bereich zwischen 2,3 und 6,6, liegen.

6. Reaktor (R) nach einem der Ansprüche 1 bis 5, **durch gekennzeichnet, dass** das letzte in Hauptströmungsrichtung (3) durch den Reaktor (R) der drei oder mehreren weitgehend ebenen Bauteile (4) ein mittleres Öffnungsverhältnis ε aufweist, welches maximal so groß ist wie oder kleiner ist als das mittlere Öffnungsverhältnis jedes der in Hauptströmungsrichtung (3) durch den Reaktor (R) vorhergehenden weitgehend ebenen Bauteile (4).

7. Reaktor (R) nach einem der Ansprüche 1 bis 6, **durch gekennzeichnet, dass** das erste in Hauptströmungsrichtung (3) durch den Reaktor (R) der mindestens drei oder mehreren weitgehend ebenen Bauteile (4) ein mittleres Öffnungsverhältnis ε aufweist, welches mindestens so groß ist wie oder größer ist als das mittlere Öffnungsverhältnis jedes der in Hauptströmungsrichtung (3) durch den Reaktor (R) nachfolgenden Bauteile (4).

8. Reaktor (R) nach einem der Ansprüche 1 bis 7, **dadurch gekennzeichnet, dass** das Verhältnis der mittleren Öffnungsverhältnisse $\varepsilon_1$ des ersten weitgehend ebenen Bauteils (4) zum mittleren Öffnungsverhältnis $\varepsilon_n$ des letzten weitgehend ebenen Bauteils (4) in Abhängigkeit vom Verhältnis der Gesamtquerschnittsfläche der Zuführleitungen (1) $\sum A_i$ zur maximalen Querschnittsfläche $A_R$ des Reaktors (R) in einem Bereich liegt, für den die Werte der Parameter p bzw. q aus der nachfolgenden Gleichung:

$$\frac{\varepsilon_1}{\varepsilon_n} \;=\; p \; \left( \frac{\sum A_i}{A_R} \right) \;+\; q$$

für p in einem Bereich zwischen 0,7 und 2,5 und für q in einem Bereich zwischen 1,0 und 2,4, bevorzugt für p in einem Bereich zwischen 2,3 und 2,5 und für q in einem Bereich zwischen 1,1 und 2,0, liegen.

9. Reaktor (R) nach einem der Ansprüche 1 bis 8, **gekennzeichnet durch** eine maximale Querschnittsfläche $A_R$ im Bereich von 0,1 bis 10,0 $m^2$, bevorzugt in einem Bereich von 1 bis 2 $m^2$.

10. Verwendung des Reaktors (R) nach einem der Ansprüche 1 bis 9 zur Durchführung von Reaktionen bei Reaktionstemperaturen in einem Bereich von 200 °C bis 1.000 °C, bevorzugt bei Reaktionstemperaturen in einem Bereich von 300 °C bis 1.000 °C, weiter bevorzugt bei Reaktionstemperaturen in einem Bereich von 500 °C bis 1.000 °C.

11. Verwendung nach Anspruch 10 **dadurch gekennzeichnet, dass** die Reaktionen ausgewählt sind aus Dehydrierungen, bevorzugt von Propan oder Butan, der Salpetersäure-Herstellung oder der Herstellung von Formaldehyd.

12. Verwendung nach Anspruch 10, **dadurch gekennzeichnet, dass** der Reaktor (R) ein Abgasreinigungssystem für einen Schiffsdieselmotor ist.

**Claims**

1. A reactor (R) with one or more feed lines (1) at one end of the reactor (R) for one or more fluid streams, each having a temperature of 200°C or more, and one or more discharge lines (2) at the other end of the reactor (R), wherein a main flow direction through the reactor (R) is defined, and the total cross-sectional area of the feed lines $\Sigma A_i$ being smaller than the maximal cross-section $A_R$ of the reactor (R), with internals (5) which supply or remove heat and/or increase the surface on which a reaction takes place, as well as with an equalizing device arranged before the internals (5) in the main flow direction (3) through the reactor (R), **characterized in that**

- the equalizing device comprises three or more essentially planar components (4), wherein essentially planar is to be understood that an essentially planar component has a dimension in the main flow direction (3) through the reactor which is of the factor of 2, preferably of the factor of 5, more preferably of the factor of 10 smaller than the dimension perpendicular to the main flow direction (3) through the reactor, which range over the entire cross-section of the reactor (R), and which are arranged mainly perpendicular to the main flow direction (3) through the reactor (R),
- with openings for one or more fluid streams in such a way that
- the hydraulic diameter of any of the three or more essentially planar components (4) being defined by $d_h = 4\, V/O$, where V is that part of the volume of the essentially planar component (4) being flown through by the fluid, and where O represents the surface area of the respective essentially planar component being wetted by the fluid is within the range from 0.5 mm to 1/10 of the hydraulic diameter $D_h$ of the reactor (R), and wherein
- two in the main flow direction (3) through the reactor (R) directly following and essentially planar components (4) having a distance less than half of the hydraulic diameter $D_h$ of the reactor (R), and more than the greater value of the two values 10 times hydraulic diameter of the respective upstream positioned essentially planar component (4) and 1/4 of hydraulic diameter of that feed line (1) with the largest cross-sectional area $A_i$.

2. Reactor (R) according to claim 1, wherein the hydraulic diameters $d_h$ of each of the three or more essentially planar components (4) are within the range from 1 mm up to the smaller of the values selected from the smallest of the hydraulic diameters of the one or more feed lines (1) and 1/10 of the hydraulic diameter $D_h$ of the reactor (R).

3. Reactor (R) according to one of the claims 1 to 2, wherein the reciprocal value of the average aperture ratio $\varepsilon$

- for each of the three or more essentially planar components (4),
- depending on the ratio of the total cross-sectional area of the feed lines (1) $\Sigma A_i$ to the maximum cross-sectional area $A_R$ of the reactor (R),
- is within a range, for which the values of the parameters m and c of the following equation

$$\frac{1}{\varepsilon} = m\sqrt{\frac{A_R}{\Sigma A_i}} + c$$

- are within a range from m=0.15 to m=1.7, and from c=1.5 to c=8.5, preferably from c=2.3 to c=6.6.

4. Reactor (R) according to one of the claims 1 to 3, wherein the reciprocal value of the average aperture ratio $\varepsilon$

- for each of the three or more essentially planar components (4),
- depending on the ratio of the total cross-sectional area of the feed lines (1) $\Sigma A_i$ to the maximum cross-sectional area $A_R$ of the reactor (R),
- is within a range, for which the values of the parameters m and c of the following equation

$$\frac{1}{\varepsilon} = m\sqrt{\frac{A_R}{\Sigma A_i}} + c$$

- are within a range from m=0.34 to m=0.38, and from c=1.5 to c=8.5, preferably from c=2.3 to c=6.6.

5. Reactor (R) according to one of the claims 1 to 3, wherein the equalizing device comprises four or more essentially planar elements (4), and the reciprocal value of the average aperture ratio $\varepsilon$

- for each of the four or more essentially planar components (4),
- depending on the ratio of the total cross-sectional area of the feed lines (1) $\Sigma A_i$ to the maximum cross-sectional area $A_R$ of the reactor (R),
- is within a range, for which the values of the parameters m and c of the following equation

$$\frac{1}{\varepsilon} = m\sqrt{\frac{A_R}{\Sigma A_i}} + c$$

- are within a range from m=0.15 to m=0.17, and from c=1.5 to c=8.5, preferably from c=2.3 to c=6.6.

**6.** Reactor (R) according to one of the claims 1 to 5, wherein the last of the three or more essentially planar components (4) in the main flow direction (3) through the reactor (R) has an average aperture ratio ε which is as great as or smaller than the average aperture ratios of each of the preceding essentially planar components (4) in the main flow direction (3) through the reactor (R).

**7.** Reactor (R) according to one of the claims 1 to 6, wherein the first of the three or more essentially planar components (4) in the main flow direction (3) through the reactor (R) has an average aperture ratio ε which is at least as great as or greater than the average aperture ratio of each of the following essentially planar components (4) in the main flow direction (3) through the reactor (R).

**8.** Reactor (R) according to one of the claims 1 to 7, wherein the ratio

- of the average aperture ratio $\varepsilon_1$ of the first component (4) in the main flow direction (3) through the reactor (R),
- to the average aperture ratio $\varepsilon_n$ of the last essentially planar component (4) in the main flow direction (3) through the reactor (R),
- depending on the ratio of the total cross-sectional area of the feed lines (1) $\Sigma A_i$ to the maximum cross-sectional area $A_R$ of the reactor (R),
- is within a range, for which the values of the parameters p and q from the following equation

$$\frac{\varepsilon_1}{\varepsilon_n} = p\left(\frac{\sum A_i}{A_R}\right) + q$$

- are within a range from p=0.7 to p=2.5, and from q=1.0 to q=2.4, preferably from p=2.3 to p=2.5, and from q= 1.1 to q=2.0.

**9.** Reactor (R) according to one of claims 1 to 8, **characterized by** a maximum cross-sectional area $A_R$ is within the range from 0.1 m$^2$ to 10.0 m$^2$, preferably within a range from 1 m$^2$ to 2 m$^2$.

**10.** Utilization of the reactor (R) according to one of the claims 1 to 8 for carrying out reactions at reaction temperatures within a range from 200 °C to 1000 °C, preferably at reaction temperatures within a range from 300 °C to 1000 °C, more preferably at reaction temperatures within a range from 500 °C to 1000 °C.

**11.** Utilization of the reactor (R) according to one of the claim 1 to 9 wherein the reactions are selected from dehydrogenations, preferably of propane or butane, the nitric acid production or from the production of formaldehyde.

**12.** Utilization of the reactor (R) according to claim 10, wherein the reactor (R) is an exhaust gas purification system for a marine diesel engine.

**Revendications**

**1.** Soit un réacteur (R) pourvu à une extrémité d'une ou plusieurs lignes d'alimentation (1) pour un ou plusieurs flux de fluide, chacun ayant une température de 200 °C ou plus, et pourvu à une autre extrémité du réacteur (R) d'un ou plusieurs conduits d'évacuation (2) pour le mélange de réaction , moyennant quoi une direction principale d'écoulement (3) à travers le réacteur (R) est définie, la surface en coupe transversale totale des canalisations d'alimentation $\Sigma A_i$ étant inférieure à l'aire AR de la coupe transversale du réacteur (R), réacteur également pourvu d'éléments de montage en son sein permettant l'apport ou l'évacuation de chaleur et/ou encore l'accroissement de la surface d'échange sur laquelle une réaction a lieu, le réacteur (R) étant également pourvu d'un dispositif permettant une distribution uniforme placé devant lesdits éléments dans le sens principal de l'écoulement, ce réacteur étant **caractérisé en ce que** :

- Le dispositif de distribution uniforme est constitué de trois ou plus de pièces (4) de géométrie sensiblement plane , ce à quoi on entend par pièces de géométrie sensiblement plane des pièces présentant un allongement dans le sens principal de l'écoulement le long du réacteur d'au moins un facteur 2, de préférence d'un facteur 5 au moins ou mieux encore d'au moins un facteur 10 plus petit que l'allongement desdites pièces dans le sens perpendiculaire à la direction principale de l'écoulement le long du réacteur (R), - chacune des pièces s'étendant sur toute la section transversale du réacteur (R) et - les pièces qui sont agencées dans une large mesure perpendiculairement à la direction principale d'écoulement (3) le long du réacteur (R), - le réacteur (R) étant également **caractérisé par** des ouvertures pour le passage de l'un ou plusieurs fluides , de telle sorte que le diamètre hydraulique dh de chacun des trois (ou plus) éléments (4) sensiblement plans, défini par dh = 4 V / S, où V est le volume d'écoulement du fluide de l'élément sensiblement plan considéré (4) et où O représente la surface mouillée par le fluide de l'élément sensiblement plan, ce diamètre hydraulique s'étalant sur une plage de 0,5 mm à 1/10 du diamètre hydraulique Dh du réacteur (R), moyennant quoi

- chacun des éléments (4) de géométrie sensiblement plane juxtaposés l'un sur l'autre étant espacés l'un respectivement à l'autre, dans le sens d'écoulement principal (3) le long du réacteur (R) de moins de la moitié du diamètre hydraulique Dh du réacteur (R) et de plus que la plus grande valeur résultant de 10 fois le diamètre hydraulique de chacun des éléments sensiblement plans (4) positionnés immédiatement en amont, et espacés d'1/4 de diamètre hydraulique de la conduite d'alimentation (1) de plus grande section transversale Ai.

2. Soit un réacteur (R) selon la revendication 1, **caractérisé en ce que** le diamètre hydraulique dh de chacun des trois (ou plus) éléments (4) de géométrie sensiblement plane s'établit dans un domaine allant de 1 mm jusqu'à la plus petite des valeurs choisies entre le plus petit des diamètres hydrauliques d'une ou de plusieurs conduites d'alimentation (1) et 1/10 du diamètre hydraulique Dh du réacteur (R).

3. Soit un réacteur (R) selon l'une des revendications 1 ou 2, **caractérisé en ce que** l'inverse du rapport d'ouverture ε moyen, pour chacun des trois (ou plus) des éléments sensiblement plans (4), en fonction du rapport de l'aire totale en section transversale pour les lignes d'alimentation (1) ΣAi à la section transversale maximale AR du réacteur (R) se trouve dans une plage de valeurs défini par l'équation suivante

$$\frac{1}{\varepsilon} = m\sqrt{\frac{A_R}{\sum A_i}} + c$$

avec m compris entre 0,15 et 1,7 et c entre 1,5 et 8,5, de préférence pour c dans un domaine compris entre 2,3 et 6,6.

4. Soit un réacteur (R) d'après l'une des revendications 1 à 3 , **caractérisé en ce que** trois éléments (4) de géométrie sensiblement plane sont prévus, et **en ce que** la valeur inverse du rapport d'ouverture ε moyen pour chacun des trois éléments (4) de géométrie sensiblement plane se trouve dans un domaine de valeurs défini par l'équation suivante, fonction du rapport de l'aire totale en section transversale pour les lignes d'alimentation (1) ΣAi à la surface maximale de coupe transversale AR du réacteur (R),

$$\frac{1}{\varepsilon} = m\sqrt{\frac{A_R}{\sum A_i}} + c$$

avec m compris entre 0,34 et 0,38 et c compris entre 1,5 et 8,5, de préférence entre 2,3 et 6,6.

5. Soit un réacteur (R) selon l'une des revendications 1 à 3, **caractérisé en ce que** quatre, voire plus, éléments (4) de géométrie sensiblement plane sont prévus, et **en ce que** la valeur inverse de la moyenne de rapport d'ouverture ε pour chacun desdits éléments (4) de géométrie sensiblement plane, cette valeur inverse étant elle-même fonction du rapport de l'aire totale en section transversale pour les lignes d'alimentation (1) Σ4i à l'aire maximale de section transversale AR du réacteur (R), est comprise dans une plage de valeurs définie par l'équation suivante,

$$\frac{1}{\varepsilon} = m\sqrt{\frac{A_R}{\sum A_i}} + c$$

Avec m compris entre 0,15 et 0,17 et c compris entre 1,5 et 8,5, de préférence entre 2,3 et 6,6.

6. Soit un réacteur (R) selon l'une des revendications 1 à 5, **caractérisé en ce que** le dernier des éléments (4) de géométrie sensiblement plane au nombre minimum de trois ou plus, pris dans la direction principale d'écoulement (3) le long du réacteur (R), présente un rapport d'ouverture moyen ε, qui est au plus aussi grand ou est plus petit que le rapport d'ouverture moyen de chacun des éléments (4) de géométrie sensiblement plane placés en amont et pris dans la direction principale d'écoulement (3) le long du réacteur (R).

7. Soit un réacteur (R) selon l'une des revendications 1 à 6, **caractérisé en ce que** le premier des éléments (4) de géométrie sensiblement plane au nombre minimum de trois voire plus, pris dans la direction principale d'écoulement (3) le long du réacteur (R), présente un rapport d'ouverture moyen ε, qui est au moins aussi grand voire plus grand que le rapport d'ouverture moyen de chacun des éléments (4) placés en aval et pris dans la direction principale d'écoulement (3) le long du réacteur (R).

8. Soit un réacteur (R) selon l'une des revendications de 1 à 7 , **caractérisé en ce que** le rapport du rapport d'ouverture ε1 du premier élément (4) de géométrie sensiblement plane au rapport d'ouverture moyen εn du dernier élément (4) de géométrie sensiblement plane est compris dans une plage de valeurs déterminées par l'équation suivante

$$\frac{\varepsilon_1}{\varepsilon_n} \doteq p\left(\frac{\sum A_i}{A_R}\right) + q$$

pour laquelle p est compris entre 0,7 et 2,5 et q compris entre 1,0 et 2,4, de préférence p compris entre 2,3 et 2,5 et q compris entre 1,1 et 2,0, ledit rapport étant fonction du rapport de la somme des sections transversales des lignes d'alimentation (1) $\sum A_i$ à l'aire maximale de section transversale AR du réacteur (R).

9. Soit un réacteur (R) selon l'une des revendications 1 à 8, **caractérisé par** une aire maximale de section transversale AR comprise entre 0,1 à 10,0 m$^2$, de préférence comprise entre 1 à 2m$^2$.

10. Utilisation du réacteur (R) selon l'une des revendications 1 à 9 pour réaliser des réactions à des températures de réaction dans une plage de 200 ° C à 1000 ° C, de préférence à des températures de réaction dans une plage de 300 ° C à 1000 ° C, de préférence à des températures de réaction dans une plage allant de 500 ° C à 1000 ° C

11. Utilisation selon la revendication 10, **caractérisée en ce que** les réactions concernées sont des réactions de déshydrogénation , de préférence de déshydrogénation du propane ou du butane, de réaction de production d'acide nitrique ou de réaction de production de formaldehyde.

12. Utilisation selon la revendication 10, **caractérisée en ce que** le réacteur (R) est un système de purification de gaz d'échappement pour un moteur diesel de bateaux.

Figur 1

Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **WILLI BOHL.** Technische Strömungslehre. Vogel-Verlag, 1998, 131

- **ERNST-ULRICH SCHLÜNDER ; EVANGELOS TSOTSAS.** Wärmeübertragung in Festbetten, durchmischten Schüttgütern und Wirbelschichten. Georg Thieme Verlag, 1988, 30
- VDI-Wärmeatlas. 1994